# EUROPÄISCHE PATENTSCHRIFT

(11) **EP 1 184 552 B1**
(45) Veröffentlichungstag und Bekanntmachung des Hinweises auf die Patenterteilung: **09.08.2006**
(21) Anmeldenummer: 01117458.8
(22) Anmeldetag: 19.07.2001
(51) Int. Cl.: F02C 7/18, F01D 25/14

(54) **Vorrichtung zum Kühlen des Gehäuses einer Fluggasturbine**
Cooling device for a gas turbine casing
Dispositif de refroidissement pour le boîtier d'une turbine à gaz

(30) Priorität: 31.08.2000 DE 10042933
(43) Veröffentlichungstag der Anmeldung: 06.03.2002
(73) Patentinhaber: Rolls-Royce Deutschland Ltd & Co KG, 15827 Dahlewitz (DE)
(72) Erfinder: Boeck, Alexander, 82288 Kottgeisering (DE)
(74) Vertreter: Weber, Joachim

(56) Entgegenhaltungen:
- US-A- 3 638 428
- US-A- 4 068 471
- US-A- 4 069 662
- US-A- 4 086 761
- US-A- 4 961 312
- US-A- 5 279 109

## Beschreibung

Die Erfindung bezieht sich auf eine Vorrichtung zum Kühlen des Gehäuses einer Fluggasturbine gemäß dem Oberbegriff des Hauptanspruchs.

Der Stand der Technik zeigt bei Zweistrom-Turbinen-Luftstrahltriebwerken einen großen, einstufigen Fan, der einen Teil der Luft durch das Kerntriebwerk leitet, während ein anderer Teil der Luftströmung als Bypass durch einen geschlossenen Ringkanal (Bypasskanal) geführt wird. Zum Zweck der Spaltkontrolle in einer Hochdruckturbine bzw. einer Niederdruckturbine ist es zur Vermeidung einer verlustreichen Umströmung der Schaufelköpfe bekannt, die Kopfspiele durch entsprechende Kühlung des Gehäuses zu minimieren.

Um die Kühlung des Gehäuses und damit das jeweilige Kopfspiel den herrschenden Betriebsbedingungen anpassen zu können, ist es erforderlich, die Kühlung, d.h. den Kühlluftstrom, entsprechend zu steuern. Insbesondere bei Triebwerkkonstruktionen, bei denen als treibende Kraft für die Kühlluftströmung nur der dynamische Druck im Bypasskanal zur Verfügung steht, kann es technisch aufwendig sein, eine entsprechende Regelung der Kühlluftströmung zu realisieren. Um die Strömung in den Bypasskanal selbst zu beeinflussen, wären relativ große Stellelemente oder Ventile erforderlich, die wiederum die Durchströmung des Bypasskanals und dessen Wirkungsgrad verringern würden.

Die US 4 069 662 A, welche den nächstkommenden Stand der Technik bildet, zeigt die Kühlluftzuführung zu einer Gasturbine. Die Kühlluftzuführung weist einen Einlauftrichter auf, der die Kühlluft in ein Rohr einleitet. Im Bereich des Rohres ist ein Ventilelement angeordnet, mit Hilfe dessen der Kühlluftstrom geregelt werden kann.

Der Erfindung liegt die Aufgabe zu Grunde, eine Vorrichtung der eingangs genannten Art zu schaffen, welche bei einfachem Aufbau, kostengünstiger Herstellbarkeit und einfacher, betriebssicherer Anwendbarkeit eine geregelte Kühlung des Gehäuses einer Turbine ermöglicht.

Erfindungsgemäß wird die Aufgabe durch die Merkmale des Hauptanspruchs gelöst, die Unteransprüche zeigen weitere vorteilhafte Ausgestaltungen der Erfindung.

Die Erfindung zeichnet sich durch eine Reihe erheblicher Vorteile aus.

Erfindungsgemäß ist somit unter anderem vorgesehen, dass in dem Bypasskanal vor dem Einlauf des Kühlluftrohrs eine bewegbare Luftumlenkklappe angeordnet ist.

Durch den Einbau einer Luftumlenkklappe vor dem Einlass des Kühlluftrohres ist es möglich, die Luftströmung in dem Bypasskanal so zu beeinflussen, dass diese entweder ungestört in das Kühlluftrohr einströmen kann oder ganz oder teilweise an dem Einlauf des Kühlluftrohrs vorbeigeleitet wird. Die erfindungsgemäße Luftumlenkklappe ist technisch sehr einfach zu realisieren, sie beeinträchtigt die Durchströmung des Bypasskanals nur unwesentlich. Andererseits ist es auf sehr effektive Weise möglich, die Einströmung von Kühlluft in das Kühlluftrohr zu regeln.

Im Rahmen der Erfindung wird somit mittels der Luftumlenkklappe der wirksame Einlaufquerschnitt des Kühlrohrs beeinflusst. Hierdurch strömt mehr oder weniger Kühlluft in das Kühlluftrohr, wodurch die Kühlung des Gehäuses der Turbine mehr oder weniger stark ist.

In einer besonders günstigen Weiterbildung der Erfindung ist vorgesehen, dass die Luftumlenkklappe zwischen einer den Einlauf des Kühlluftrohrs vollständig freigebenden Öffnungsstellung und einer den Einlauf strömungsmäßig abdeckenden Schließstellung bewegbar ist. Es ist somit eine stufenlose Beeinflussung des wirksamen Einlaufquerschnitts des Kühlluftrohrs möglich.

Die Luftumlenkklappe ist in Form einer an ihrem vorderen Ende schwenkbar gelagerten Klappe ausgebildet. Das vordere, in Strömungsrichtung vorne liegende Ende der klappenförmigen Luftumlenkklappe ist somit mechanisch ausreichend fixiert. Die Form der Luftumlenkklappe bewirkt, dass die Kühlluftströmung in dem Bypasskanal im Wesentlichen nur Druckkräfte auf die Luftumlenkklappe ausübt. Dabei ist es besonders vorteilhaft, dass sich die Luftumlenkklappe im Wesentlichen in Strömungsrichtung des Bypasskanals erstreckt, sodass sie von seiner Schließstellung in die Öffnungsstellung in einem spitzen Winkel anstellbar ist. Das hintere Ende der Luftumlenkklappe ist bevorzugterweise nahe an dem Einlauf des Kühlluftrohres angeordnet, um unerwünschte Wirbelbildung oder Ähnliches zu vermeiden.

Es versteht sich, dass die Luftumlenkklappe beliebige geometrische Formen aufweisen kann, sie kann plattenförmig oder sphärisch gekrümmt ausgebildet sein, um sich in optimaler Weise an den Einlaufquerschnitt des Kühlluftrohrs anzupassen.

Weiterhin ist es besonders günstig, dass die Luftumlenkklappe in der Öffnungsstellung des Kühlluftrohres gegen die innere Wand des Bypasskanals anliegt. Diese kann zu diesem Zweck mit einer Ausnehmung versehen sein, sodass die Luftumlenkklappe strömungstechnisch optimiert in diese Ausnehmung ganz oder teilweise versenkbar ist.

Die Betätigung der Luftumlenkklappe erfolgt bevorzugterweise über eine Betätigungsstange, die mit einem Betätigungsorgan gekoppelt ist. Das Betätigungsorgan kann in Form eines Stellmotors ausgebildet sein. Somit kann eine sehr einfache und wirkungsvolle Schwenkung der Luftumlenkklappe erfolgen.

Im Folgenden wird die Erfindung anhand eines Ausführungsbeispiels in Verbindung mit der Zeichnung beschrieben. Es zeigt:

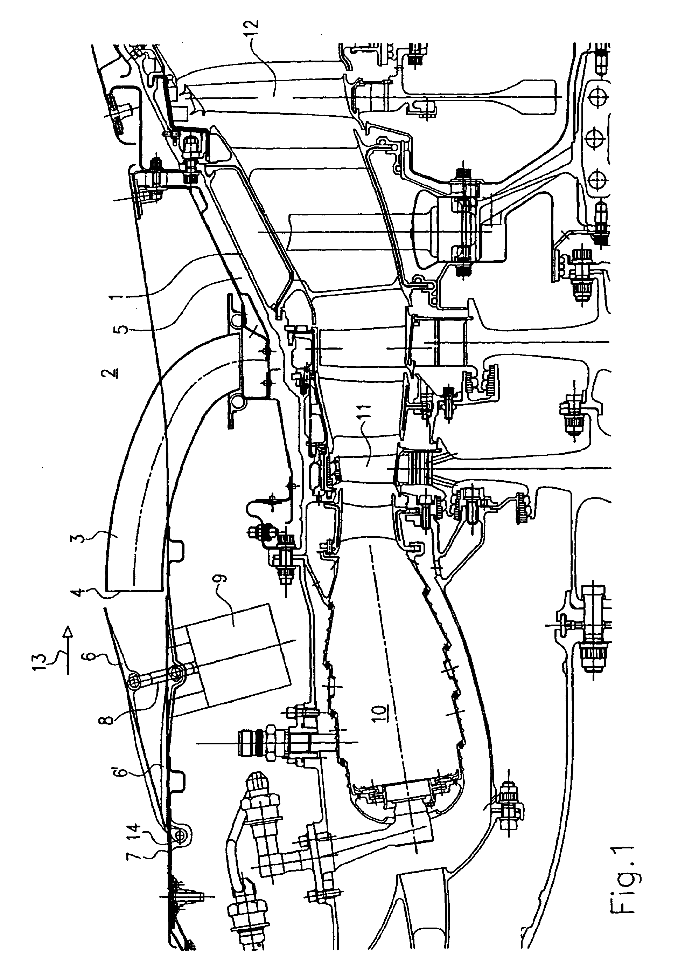

- Fig. 1: eine vereinfachte Teil-Schnittansicht eines Teilbereichs einer Fluggasturbine mit vereinfachter Darstellung einer Brennkammer mit einer Hochdruckturbine und einer Niederdruckturbine sowie mit einer Darstellung des Kühlluftrohrs und der erfindungsgemäßen Luftumlenkklappe.

Fig. 1 zeigt in schematischer Darstellung einen Teilbereich einer Fluggasturbine im Längsschnitt. Die Fluggasturbine umfasst eine Brennkammer 10, eine nachgeordnete Hochdruckturbine 11 sowie eine Niederdruckturbine 12. Die Turbinen 11, 12 sind innerhalb eines Gehäuses 1 angeordnet, welches von einer im Wesentlichen ringförmigen Kühlluftkammer 5 umgeben ist. In die Kühlluftkammer 5 mündet ein Kühlluftrohr 3, dessen Einlauf 4 sich in einen Bypasskanal 2 erstreckt, durch den, wie durch den Pfeil 13 dargestellt, Bypassluft von einem Fan geleitet wird. Die in den Einlauf 4 einströmende Bypassluft wird durch das Kühlluftrohr 3 somit in die Kühlluftkammer 5 geleitet. Diese kann in einzelne Unterkammern unterteilt werden, sodass sichergestellt ist, dass die Kühlluft das Gehäuse 1 der Turbine entsprechend abkühlt.

Vor dem Einlauf 4 des Kühlluftrohrs 3 ist erfindungsgemäß eine klappenförmige Luftumlenkklappe 6 schwenkbar gelagert. Das strömungsmäßig vordere Ende der Luftumlenkklappe 6 ist mittels eines Scharniers 14 an der inneren Wand 7 des Bypasskanals 2 gelagert. Weiterhin ist an der Luftumlenkklappe 6 eine Betätigungsstange 8 gelagert, die mit einem Betätigungsorgan 9 (Stellmotor oder Ähnliches) verbunden ist.

Die Figur 1 zeigt die Luftumlenkklappe 6 in der Schließstellung, in welcher der Einlauf 4 des Kühlluftrohrs 3 im Wesentlichen geschlossen ist. Darunter liegend, mit dem Bezugszeichen 6' gekennzeichnet, ist die Luftumlenkklappe 6 in der Öffnungsstellung dargestellt, in welcher der Einlauf 4 vollständig in der Strömung des Bypasskanals 2 ist. Die innere Wand 7 kann mit Ausnehmungen versehen sein, um die Luftumlenkklappe 6 in der Öffnungsstellung, zumindest teilweise, zu versenken und den Strömungswiderstand zu verringern.

### Bezugszeichenliste:

- 1: Gehäuse
- 2: Bypasskanal
- 3: Kühlluftrohr
- 4: Einlauf 3
- 5: Kühlluftkammer
- 6: Luftumlenkklappe
- 7: Innere Wand 2
- 8: Betätigungsstange
- 9: Betätigungsorgan
- 10: Brennkammer
- 11: Hochdruckturbine
- 12: Niederdruckturbine
- 13: Bypassluft
- 14: Scharnier

## Patentansprüche

1. Vorrichtung zum Kühlen des Gehäuses (1) einer Fluggasturbine mit einem Bypasskanal (2) und zumindest einem Kühlluftrohr (3), dessen Einlauf (4) sich in den Bypasskanal (2) erstreckt und welches zur Zuführung von Kühlluft zu dem Gehäuse (1) in zumindest eine Kühlluftkammer (5) mündet, **dadurch gekennzeichnet, dass** in dem Bypasskanal (2) vor dem Einlauf (4) des Kühlluftrohrs (3) eine bewegbare, nicht dichtend abschließende Luftumlenkklappe (6) angeordnet ist, welche in Form einer an ihrem vorderen Ende schwenkbar gelagerten Klappe ausgebildet ist, welche sich im Wesentlichen in Strömungsrichtung des Bypasskanals (2) erstreckt und welche in der Öffnungsstellung gegen die innere Wand (7) des Bypasskanals (2) anlegbar ist und in der Schließstellung in einem spitzen Winkel zur inneren Wand (7) des Bypasskanals (2) angestellt ist.

2. Vorrichtung nach Anspruch 1, **dadurch gekennzeichnet, dass** die Luftumlenkklappe (6) zwischen einer den Einlauf (4) des Kühlluftrohrs (3) vollständig freigebenden Öffnungsstellung und einer den Einlauf (4) strömungsmäßig nicht dichtend abdeckenden Schließstellung bewegbar ist.

3. Vorrichtung nach einem der Ansprüche 1 oder 2, **dadurch gekennzeichnet, dass** die Luftumlenkklappe (6) über eine Betätigungsstange (8) mit einem Betätigungsorgan (9) gekoppelt ist.

4. Vorrichtung nach Anspruch 3, **dadurch gekennzeichnet, dass** das Betätigungsorgan (9) in Form eines Stellmotors ausgebildet ist.

## Claims

1. Cooling device for the casing (1) of an aircraft gas turbine with a bypass duct (2) and at least one cooling air tube (3), this cooling air tube (3) having its inlet (4) extending into the bypass duct (2) and entering at least one cooling air chamber (5) for the supply of cooling air to the casing (1), **characterized in that** a movable, not hermetically closing air deflector (6) is arranged in the bypass duct (2) upstream of the inlet (4) of the cooling air tube (3), this air deflector being provided as a flap which is swivably located at its forward end, essentially extends in the flow direction of the bypass duct (2) and which in the open position can be located against the inner wall (7) of the bypass duct (2), and in closed position makes an acute angle with the inner wall (7) of the bypass duct (2).

2. Device in accordance with Claim 1, **characterized in that** the air deflector (6) is movable between an open position in which the inlet (4) of the cooling air tube (3) is fully exposed to the air flow and a closed position in which the inlet (4) is isolated from the air flow, this isolation however not being hermetical.

3. Device in accordance with one of the Claims 1 or 2, **characterized in that** the air deflector (6) is connected to an actuating unit (9) by means of an actuating rod (8).

4. Device in accordance with Claim 3, **characterized in that** a positioning motor is provided as actuating unit (9).

## Revendications

1. Dispositif pour refroidir le carter (1) d'une turbine à gaz pour l'aéronautique avec un canal-bipasse (2) et au moins un tube d'air de refroidissement (3), dont l'entrée (4) s'étent dans le canal-bipasse (2) et qui débouche dans au moins une chambre d'air de refroidissement (5) afin d'amener de l'air de refroidissement vers le carter (1), **caractérisé en ce que** dans le canal-bipasse (2) et devant l'entrée (4) du tube d'air de refroidissement (3) est disposé un clapet déflecteur (6) mobile et ne fermant pas hermétiquement, qui a la forme d'un volet logé de manière pivotante à son extrémité avant et qui s'étend pour l'essentiel dans le sens d'écoulement du canal-bipasse (2) et qui peut s'appuyer en position ouverte sur la paroi intérieure (7) du canal-bipasse (2), et qui est positionné en position fermée selon un angle aigu par rapport à la paroi intérieure (7) du canal-bipasse (2).

2. Dispositif selon la revendication 1, **caractérisé en ce que** le clapet déflecteur (6) peut être manoeuvré entre une position ouverte dégageant intégralement l'entrée (4) du tube d'air de refroidissement (3) et une position fermée recouvrant l'entrée (4) non-hermétiquement en termes d'écoulement.

3. Dispositif selon une des revendications 1 ou 2, **caractérisé en ce que** le clapet déflecteur (6) est couplé à un organe de commande (9) moyennant une tige de commande (8).

4. Dispositif selon la revendication 3, **caractérisé en ce que** l'organe de commande (9) revêt la forme d'un servomoteur.
